Europäisches Patentamt

(19) European Patent Office

Office européen des brevets

(11) Publication number: **0 242 620 B1**

(12) **EUROPEAN PATENT SPECIFICATION**

(45) Date of publication of patent specification:
**12.06.91 Bulletin 91/24**

(51) Int. Cl.⁵: **C08J 9/14**, C08L 61/06,
C08J 9/00

(21) Application number: **87104350.1**

(22) Date of filing: **24.03.87**

(54) **Modified phenolic foam catalysts and method.**

The file contains technical information submitted after the application was filed and not included in this specification

(30) Priority: **18.04.86 US 853397**

(43) Date of publication of application:
**28.10.87 Bulletin 87/44**

(45) Publication of the grant of the patent:
**12.06.91 Bulletin 91/24**

(84) Designated Contracting States:
**AT BE CH DE ES FR GB GR IT LI LU NL SE**

(56) References cited:
**BE-A- 732 693**
**FR-A- 2 292 733**
**FR-A- 2 329 709**
**FR-A- 2 529 898**
**US-A- 4 546 119**

(73) Proprietor: **FIBERGLAS CANADA Inc.**
**4100 Yonge Street**
**Willowdale Ontario M2F 2B6 (CA)**

(72) Inventor: **Meunier, Paul J.**
**125 James Street**
**Sarnia, ON M7T 6P3 (CA)**
Inventor: **Lunt, James**
**2575 Kaymar Crescent**
**Brights Grove, ON N0N 1C0 (CA)**
Inventor: **MacPherson, Edwin J.**
**1271 Wilshire Drive**
**Sarnia, ON N7S 3Z7 (CA)**

(74) Representative: **Patentanwälte Grünecker,**
**Kinkeldey, Stockmair & Partner**
**Maximilianstrasse 58**
**W-8000 München 22 (DE)**

## Description

This invention relates to a method of making a closed cell phenolic foam material from a composition of phenol-formaldehyde resole resin.

The manufacture of phenolic foams is achieved by intimately mixing a phenolic resin with an acid catalyst, a surface active agent and a blowing agent. The phenolic resins generally used are resoles which, under the influence of an acid catalyst, undergo further condensation to produce an infusible thermoset material. The rate of this condensation or 'cure' is determined by the nature and quantity of acid catalyst and the rate of production and removal of volatile condensation products, such as formaldehyde and water.

Typical acid catalysts used in the manufacture of phenolic resin foams are the aromatic sulfonic acids, such as xylene – toluene sulfonic acids (ULTRA TX – trademark of Witco Chemicals), or phenol sulphonic acid. These acids are generally used in the 10% to 25% level to achieve commercially acceptable cure times in the manufacture of phenolic resin foams. These levels of acid catalysts lead to high exotherm temperatures and a pronounced moisture sensitivity in the final product.

In the manufacture of closed cell phenolic foams, such high exotherm temperatures necessitate the use of pressure during the expansion process to prevent 'rupture' of the cell windows. This bursting of the cells is caused by the high vapour pressures generated by the presence of the blowing agent, along with volatile condensation products, such as water and formaldehyde. Thus US Pat No. 4 423 168 discloses a method for making a phenolic foam whereby the phenolic resole resin foamable composition is introduced into a substantially closed volume and foamed under pressure in excess of 13,8 kPa (2 pounds/inch$^2$).

In addition, theme acid levels induce a degree of moisture sensitivity which creates problems with regard to dimensional and thermal stability of the resultant foam.

The above deficiences have severely limited the commercial utility of closed cell phenolic foams. Attempts to reduce the peak temperature, and moisture sensitivity by reducing the acid level, as described in European Patent Nos. 066967 and 066968, lead to extended set and cure times, making the manufacturing process slow.

Several references of prior art disclose resorcinol as a reactant with the resole resin itself. Among those is the closed cell phenolic foam described in U.S. Patent No. 4,546,119.

This reference discloses a method of making a phenolic foam material by reacting the phenol-formaldehyde resole with resorcinol, urea or both prior to initiating foam formation by acid catalysis.

Canadian Patent 859,789 discloses a method of manufacture of phenolic foams including the addition of resorcinol to the phenol formaldehyde resin and blowing agent prior to the addition of strong acid which is last. Resorcinol, in this case, was found to reduce the amount of acid required for foam formation.

FR-A-2 292 733 discloses the preparation of non-acid or weakly acid phenol-formaldehyde foams by mixing an organic acid hardening agent with a diphenol along with a resole containing an expanding agent.

FR-A-2 329 709 discloses a process for producing a phenolic foam from a resole resin from which water has been removed.

FR-A-2 529 898 discloses a process for producing a phenolic foam by reacting an aqueous phenolic resole with an aryl sulfonic acid.

It is the object of the present invention to provide a method of making a closed cell phenolic foam material having an increased rate at which the foam cures without causing damage to the foam properties.

Said object is achieved by a method of making a closed cell phenolic foam material which comprises mixing a phenol formaldehyde resole resin from which most of the free water has been vacuum stripped and which has a mole ratio of phenol to formaldehyde of from 1 ; 1,5 to 1 ; 4,5, a surfactant and a blowing agent with a modified acid catalyst consisting of an aromatic acid, a phenol selected from the group consisting of resorcinol, m-cresol, o-cresol and p-cresol or a mixture thereof, and a diluent and subsequently curing the resultant mixture from an ambient temperature of about 20°C to yield a closed cell phenolic foam, said phenol acting to achieve a maximum peak reaction temperature of 85 to 95°C in a time of from 3 to 6 min.

In one aspect of the present invention the modified phenolic foam catalyst components are each introduced to the phenol formaldehyde resole resin, surfactant and blowing agent mixture in separate streams. Each component is diluted with a suitable diluent, including a glycol, preferably diethylene glycol.

The phenol used in the catalyst in preferably resorcinol.

In accordance with this invention, the use of a modified catalyst enables certain prior art deficiencies to be overcome and, at the same time, leads to commercially acceptable cure times. In particular, the incorporation of the phenol, including resorcinol into the aromatic acid catalyst glycol mixture, leads to a commercially viable process and leads to a foam product having improved moisture resistance over those disclosed in the process disclosed in U.S. Patent 4,423,168.

In these prior art disclosures concerning closed cell phenolic foams, the proposed processes rely on the use of large amounts of acid catalysts which stay in the finished foam products and render them moisture sensitive.

FIG. 1 is a plot of cure exotherms comparing the rate at which the foam reaches peak exotherm for various modified catalyst solutions.

FIG. 2 shows a plot of cure exotherms illustrating the rate at which the foam reaches peak exotherm temperature for various amounts of the standard catalyst.

FIG. 3 shows a plot of cure exotherms for the resorcinol catalyst and the standard catalyst in a phenol-formaldehyde resin having a mole ratio 1 : 2.5. (P/F Resin 1 : 2.5 Ratio)

FIG. 4 shows a plot of cure exotherms for the resorcinol catalyst and the standard catalyst in a phenol-formaldehyde resin having a mole ratio of 1 : 3.7. (P/F Resin 1 : 3.7 Ratio).

The method of the invention comprises introducing into a phenolic foam resole resin composition composed of phenol-formaldehyde resole resin, surfactant and blowing agent, a modified acid catalyst consisting of an aromatic acid and a phenol.

In one embodiment of the present invention, the aromatic acid component and the phenol component of the modified catalyst are introduced to the phenolic foam resole resin composition in a separate stream.

In practicing the present invention, closed cell phenol formaldehyde foam is prepared by adding the modified acid catalyst to an admixture containing a frothable liquid phenol formaldehyde resole resin, a volatile blowing agent for the liquid phenol, aldehyde resole resin and a surfactant which is a stabilizing agent for the frothed liquid phenol aldehyde resole resin. A stable uncured froth is produced containing closed cells which have cell walls formed of the liquid resole resin and the closed cells are formed by the liquid blowing agent in gaseous phase. The uncured froth is shaped and then cured by the modified acid catalyst.

During the preparation of the phenolic foams, volatiles are produced as a result of the condensation reactions which occur on crosslinking. These volatile materials, which comprise mainly water and formaldehyde must be removed during the post curing process to provide a dimensionally stable product. The temperature at which curing is carried out is selected so as to produce no significant deterioration is closed cell content due to rapid release of these volatiles.

Liquid frothable phenol formaldehyde resole resins suitable for practicing the present invention are well known and the general reaction conditions and variables used in the preparation thereof do not comprise a part of this invention. Numerous patents, including U.S. patents No. 4,525,492 and No. 4,546,119 and other publications disclose the preparation of liquid resole resins for foam formulations.

Generally, liquid resole resins are prepared by reacting one or more phenols with one or more aldehydes in aqueous phase and in the presence of an alkaline catalyst. Examples of phenols include phenol per se, resorcinol, cresol, xylenol, chlorophenol, bisphenol-A, alpha-naphthol, beta-naphthol, and admixtures thereof.

The present invention is preferably directed to the preparation of closed cell foam from frothable liquid resole resins prepared from phenol per se and formaldehyde.

Blowing agents typically used for phenolic foams are any of the more common FREON blowing agents such as trichlorofluoromethane (sold under the trademark FREON 11), tetrafluoromethane, 1,1,2-trichloro-1,2,2-trifluoromethane, monochlorodifluoromethane, dichlorodifluoromethane, [1,1-dichlorodifluoromethane, dichlorodifluoroethane,] 1,1-dichloro-1,2,2,2,-tetrafluoroethane, 1,2 dichloro-1,1,2,2tetrafluoroethane (FREON 114) and mixtures of these ; or chlorinated hydrocarbons, such as methylchloride, chloroform, methylenedichloride, carbontetrachloride and mixtures of these with fluorocarbons, or low boiling hydrocarbons such as propane, butane, pentane, hexane or cyclohexane or low boiling ethers, such as dimethyl, diethyl and dipropyl ether ; or ketones such as acetone and methylketone ; or low boiling materials, such as carbon disulfide, methyl alcohol, and propyl alcohol, or materials which decompose under the influence of heat to generate nitrogen or another gas "in situ", such as diazo compounds ; or materials which liberate carbon dioxide under the influence of acids, such as ammonium carbonate, calcium or sodium carbonate or sodium bicarbonate.

The quantity of the blowing agent varies with the type and density of the foam desired.

The surfactant may be any suitable stabilizing agent for use in stabilizing liquid phenol form aldehyde resole resin foams. The prior art describes the use of many types of surfactants which are suitable for use. Nonionic, cationic and even anionic types have been claimed.

Surfactants which are generally used for phenolic foam manufacture are typically non-ionic in nature however. Surfactants containing silicon are widely used, such as the silicon ethylene oxide/propylene oxide copolymers of alkoxy silanes, polysilyl/phosphonates, polydimethylsiloxane, and polyoxyalkylene copolymers. Examples of suitable commercial silicon-containing surfactants are the Dow Corning Trademarks DC-190 and DC-193 and the Union Carbide Trademarks L-530, L-5310 and L-5410. Other non-ionic surfactants are suitable including the Pluronic (trademark of BASF Wyandotte) non-ionic surfactants, particularly the high molecular weight F-127, F-108 and F-98 polyethylene-polypropylene oxides. These, although difficult to disperse, tend to form very stable emulsions with Freons and are quite insoluble in Freons. Polyethylene oxides or polypropylene oxides could also be used.

Surfactant concentrations can vary from 2 to 10% of the total formulation weight. The preferred level for the resoles described herein is 2 to 5%. To produce closed cell foams which contain the blowing agent in sufficient amounts to give superior thermal values, careful selection of resin and surfactant properties is required.

The prior art catalysts employed is the manufacture of phenolic foams arm usually acids. Under certain circumstances foam may be generated solely by the application of heat without the use of a catalyst. In practice, however, a catalyst is necessary to complete the curing of the foams, as it is not feasible to do this by heating alone. The cure behavior of phenolic resins is discussed in more detail in chapters 5 and 10 in "The Chemistry of Phenolic Resins" by R.W. Martin, J. Wiley and Sons, Ins., 1956.

Numerous acid catalysts, both organic and inorganic, are known and disclosed in the prior art. Examples of inorganic acids include hydrochloric acids, sulfuric acids, nitric acid, and the various phosphoric acids. Examples of organic acids include aromatic sulfonic acids, such as benzene sulfonic acid, toluene sulfonic acid, xylene sulfonic acid, phenol sulfonic acid and naphthalene sulphonic acid ; latent acid catalysts such as phenol esters of carboxylic acids including phenyl trifluoroacetate and phenyl hydrogen maleate and various sulfur dioxide containing compounds such as tie sulfur of $\alpha,\beta$-unsaturated ketones and aldehydes and various dienes; mono and poly carboxylic acids such as acetic acid, formic acid, propionic acid, oxalic acid, maleic acid and strong substituted organic acids such as trichloracetic acid. An admixture of toluene sulphonic acid is usually preferred. The acid catalyst sold under the trademark Ultra TX (Witco Chemical Company), the xylene-toluene sulfonic acids are especially preferred. Other acid catalysts of the type are disclosed in U.S. Pat Nos. 4,525,492 and 4,423,163.

The present invention is directed to modified phenolic foam catalysts. We have found that the addition of a phenol to the acid catalyst results in an increased rate at which the closed cell phenolic foam reaches peak exotherm temperature without significantly affecting the peak temperature. As well, there is an increase in the rate at which a closed cell phenolic foam cures without causing damage to the foam properties. Thus, the use of such a modified acid catalyst results in a more commercially feasible process and as hell, the maintenance of foam properties deficient in the prior art.

These novel modified acid catalysts are useful in making foams from all the acid catalysed phenolic compositions which are usually employed in the manufacture of such resins. The invention is directed to the production of foams from phenol formaldehyde resins of the resol type in which the ratio of phenol to formaldehyde (P/F) is 1 : 1.5 to 4.5. U.S. Patent No. 4,396,563 discloses the preparation of resin having a phenol to formaldehyde mole ratio of 1 : 1.1 to 3.0. U.S. Pat. No. 4,546,119 describes closed cell phenolic foams with a P/F mole ratio of between 1 : 3 and 1 : 4.5.

Although the phenol to formaldehyde mole ratios indicated above are preferred and are used to illustrate the present invention, this description does not detract from a more general application to the preparation of acid-catalyzed phenol formaldehyde resin foams in general.

The following preparations and examples illustrate the invention.

Example 1 illustrates the various catalyst formulations including the standard (unmodified) catalyst, and various modified phenolic foam catalysts including as a modifying component, resorcinol ; m-cresol, p-cresol and o-cresol. All catalysts include as the acid component, Ultra TX trademark of Witco Chemical Company which is anhydrous toluene xylene sulfonic acid and a diluent, diethylene glycol.

## Example 1. PREPPARATION OF MODIFIED CATALYST FORMULATIONS

The following catalyst compositions were prepared by mixing the various components shown.

## RESORCINOL CATALYST

| | | |
|---|---|---|
| | Resorcinol | 35.0g |
| | Diethylene Glycol | 43.3 |
| | Ultra TX | 21.7 |
| | | 100.0 |

## TWO STREAM RESORCINOL CATALYST SYSTEM

| | | |
|---|---|---|
| Stream #1 | Resorcinol | 50.0g |
| | Diethylene Glycol | 50.0 |
| | | 100.0 |
| Stream #2 | Ultra TX | 73.3 |
| | Diethylene Glycol | 26.7 |
| | | 100.0 |

The two catalyst components were metered separately to mix with separate resin and Freon streams. The catalyst components were used at a ratio of 60% Stream # 1,030% Stream # 2.

---

## M-CRESOL CATALYST

| | |
|---|---|
| M-Cresol | 35.0g |
| Diethylene Glycol | 43.3 |
| Ultra TX | 21.7 |
| | 100.0 |

---

## P-CRESOL CATALYST

| | |
|---|---|
| P-Cresol | 35.0g |
| Diethylene Glycol | 43.3 |
| Ultra TX | 21.7 |
| | 100.0 |

---

## O-CRESOL CATALYST

| | |
|---|---|
| O-Cresol | 35.0g |
| Diethylene Glycol | 43.3 |
| Ultra TX | 21.7 |
| | 100.0 |

---

## UREA CATALYST

| | |
|---|---|
| Urea | 35.0g |
| Diethylene Glycol | 43.3 |
| Ultra TX | 21.7 |
| | 100.0 |

---

## STANDARD CATALYST (UNMODIFIED)

| | |
|---|---|
| Diethylene Glycol | 66.7g |
| Ultra TX | 33.3 |
| | 100.0 |

---

## PHENOL CATALYST

| | |
|---|---|
| Phenol | 35.0g |
| Diethylene Glycol | 43.3 |
| Ultra TX | 21.7 |
| | 100.0 |

---

EXAMPLE 2 – PREPARATION OF RESOLE

A sodium catalysed phenol formaldehyde resole with a phenol to formaldehyde ratio of 1 : 1.73 was prepared according to methods known to those skilled in the art using 44% formaldehyde solution. The completed resin was neutralized with acid and stripped in vacuo to remove most of the free water and give a resole with the following properties.

| | |
|---|---|
| Viscosity at 25° | 298 Pa.s (298,000 cps) |
| Percent Free Water | 2.75% |
| Wt. Av. Mol. Wt. | 422 |
| No. Av. Mol. Wt. | 170 |
| Z Av. Mol. Wt. | 700 |
| Dispersivity | 2.5 |

A surfactant, Dow Corning DC 193, was added at a level of 3.8% by weight.

Modified catalysts as shown in Example 1 can be utilized to prepare closed cell phenolic foams from the resole. We have found that, the modified catalysts of the present disclosure vary the speed at which a closed cell phenolic foam reaches peak exotherm temperature without having a significant affect on the peak temperature.

In general, the addition of resorcinol or, the cresols to the acid catalyst resulted in an increase in the rate at which peak exotherm temperature was reached in comparison with the standard (unmodified) catalyst. Conversely, the addition of urea was found to slow the rate of reaction.

To achieve a high degree of closed cell character and thus good thermal properties, we found it necessary for a reaction temperature of 85°-95°C to be reached in a reactivity test of foaming commencing from ambient temperature in a period of between 3 to 6 min and preferably 4 min. In the case of the resorcinol catalyst, maximum peak temperature was achieved after 3 min.

REACTIVITY OF 1 : 1.73 P/F RESIN

The reactivity was assessed in the following manner : A mixture of 100 g of P/F resole resin and Dow Corning's DC-193 surfactant, was mixed with 1.4 g of Freon 113 as a blowing agent until a stable emulsion was obtained. To the emulsion was added 5.0 g of a modified acid catalyst solution selected from those of Example 1 or 3.3 g of the standard (unmodified) catalyst solution of Example 1, and the material was stirred until homogeneous.

It should be noted that all catalysts used contained the same acid equivalent of ULTRA TX and diethylene glycol as illustrated in Example 1. Weight differences between the standards and modified catalysts are caused by the addition of the additive.

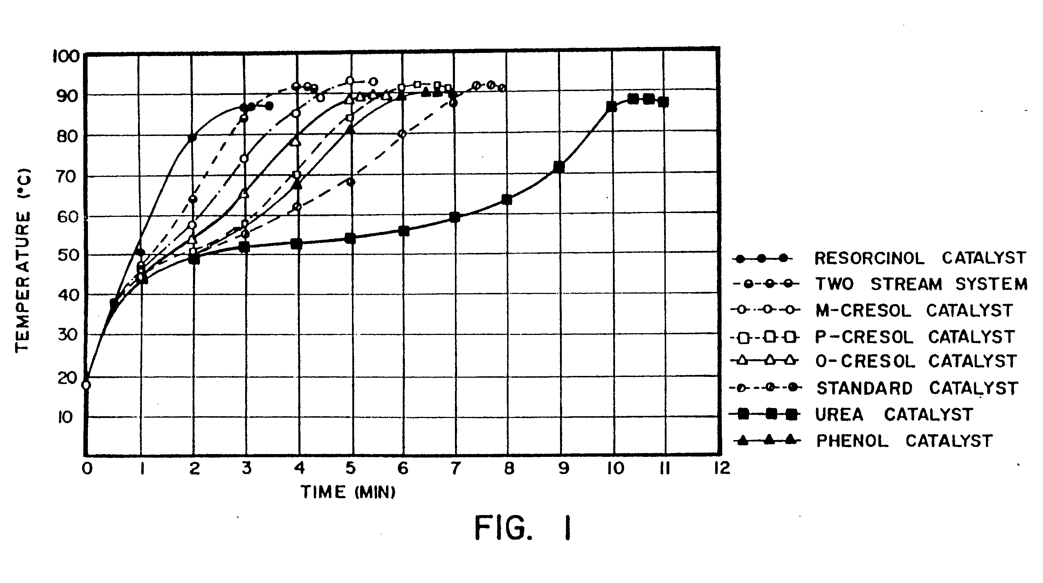

All samples were foamed in an 20,3 cm × 20,3 cm × 5,1 cm (8″ × 8″ × 2″) steel mold equipped with a thermocouple probe. The mold was heated to 60°C. The samples were cured in a 60°C oven. All resin samples were used at an initial temperature of 30°C. A thermocouple was used to measure the rate of change in temperature which was recorded on an xy plotter. These plots are shown in Fig. 1.

Typically, the maximum peak temperature acieved for the resole formulations of Example 1 (P/F 1 : 1.73) when cured by a modified acid catalyst from an ambient temperature of about 20°C under these conditions was between 85-95°C in 3 to 6 min. This method was used to establish changes in the rate at which the foam reached peak exotherm temperature as it relates to the various modified acid catalysts. Comparison of the time-temperature profiles shown in Fig. 1 illustrates that the resorcinol catalyst produced the fastest rate followed closely by the separate stream resorcinol catalyst. The addition of urea slowed the reaction, making it slower than the standard catalyst. It can be seen that generally the addition of a modified catalyst produces foams that reach peak exotherms faster without causing the peak temperature to rise significantly. Also, phenolic foams tend to cure at a faster rate with the addition of a modified catalyst with the exception of urea which slows the reaction.

ADDITIONAL TESTING WITH RESORCINOL CATALYST

The resorcinol catalyst illustrates a great capacity to speed the rate at which the foam reaches peak exotherm temperature without having a significant affect on the peat temperature and therefore cell rupture is minimized. In further testing, the amount of catalyst was altered from 4.0 g to 6.0 g with the following results :

| Weight of Resorcinol Catalyst | Exotherm |
|---|---|
| 4.0g | 88.8°C in 5.75 min |
| 5.0g | 90.0°C in 4.40 min |
| 6.0g | 96.2°C in 2.75 min |

As can be seen by a comparison of the exotherms produced for the various amounts of catalyst, an increase in the amount of resorcinol catalyst results in a decrease in the time necessary to reach peat exotherm temperature without a significant affect to the peak temperature itself.

It has also been found that foam samples made with the resorcinol catalyst solution retained their properties at lower foam densities. A comparison of closed cell phenolic foams made with the standard catalyst and the resorcinol catalyst are illustrated below. These latter foams were manufactured on a pilot line capable of producing commercial size samples.

| Property | Standard Catalyst 55-2 | Resorcinol Catalyst 60-4 |
|---|---|---|
| Density g/cm³ (1b/ft³) | 0,040 (2.55) | 0,037 (2.30) |
| Percent Closed Cells (ASTM D856) | 95.0 | 94.8 |
| Friability (ASTM C-421) | 4.88 | 5.4 |
| K (Initial) Btu. in/ft² h °F | 0.107 | 0.103 |
| tPercent Moisture Absorption | 4.13 | 4.27 |
| pH | 4.67 | 4.31 |

tWater absorption was measured using powdered 1.0 g samples of foam in a weighing dish allowed to stand over water at 25°C and 80% relative humidity for 24 h.

STANDARD CATALYST AT INCREASING LEVELS

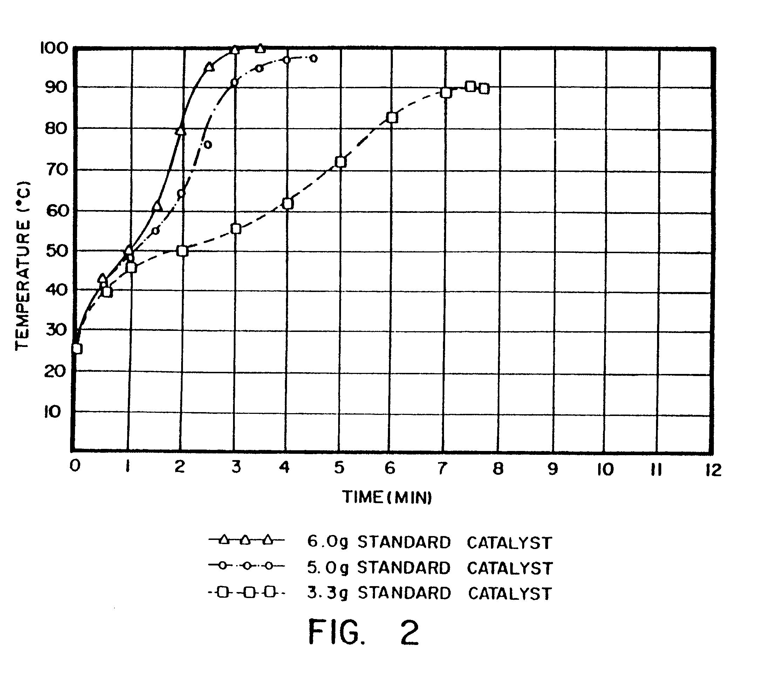

The rate at which a closed cell phenolic foam reaches peak exotherm temperature can be decreased by using higher levels of standard catalyst solution as shown in Fig. 2. However, an increaae in the amount of standard catalyst solution is also accompanied by an increase of the peak exotherm temperature. The peak temperature could reach levels that could be detrimental to foam properties resulting from a rupture of cells generated by the higher internal pressures reached during the early stages of froth formation.

RESORCINOL CATALYST IN DIFFERENT P/F RESINS

The use of the resorcinol catalyst in different mole ratio resins produces results similar to those of the 1 : 1.73 P/F resin. The P/F resin foam formulations below here prepared in accordance with the procedure for preparing the 1 : 1.73 P/F resin formulation. The resin formulations prepared in this manner had the following proportions and reaction conditions :

### 1: 2.5 P/F Resin Foam Formulation

| | |
|---|---|
| 1: 2.5 P/F Resin | 96.2g |
| DC-193 | 3.8 |
| Freon 113 | 14.0 |
| Standard catalyst | 12.0g |
| and/or resorcinol catalyst | 8.0g |
| Oven temperature | 60°C |
| Resin temperature | 30°C |

### 1: 3.7 Resin Foam Formulation

| | |
|---|---|
| 1: 3.7 P/F Resin | 96.2g |
| DC-193 | 3.8 |
| Freon 113 | 14.0 |
| Standard catalyst | 25.0g |
| and/or resorcinol catalyst | 12.5g |
| Oven temperature | 60°C |
| Resin temperature | 30°C |

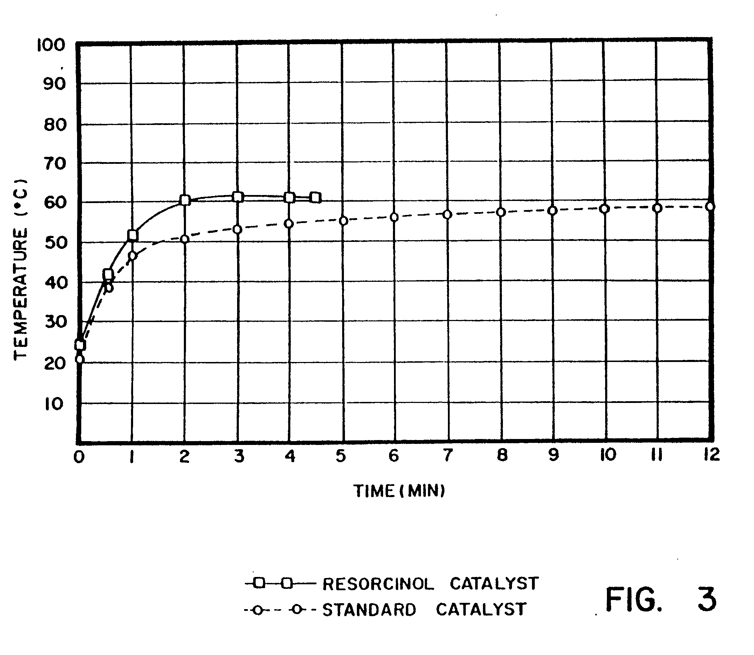

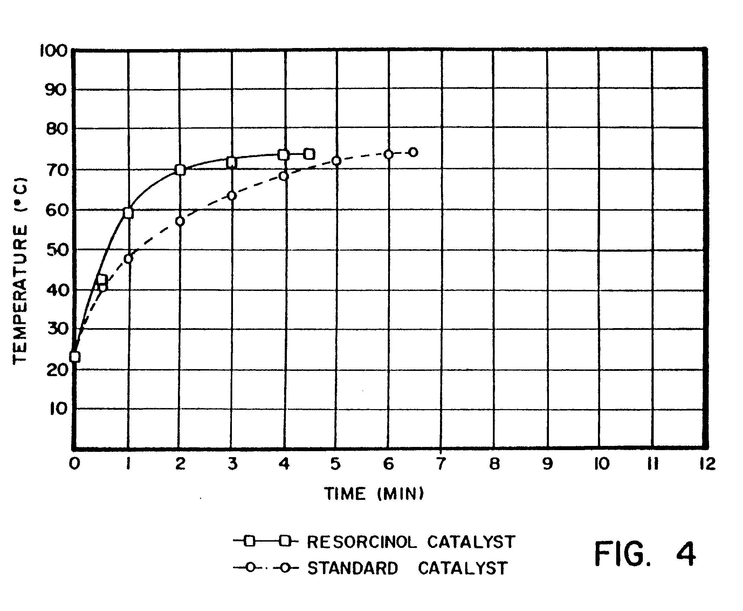

As can be seen from the exotherms shown in Figs. 3 and 4, comparing the results from the addition of the resorcinol catalyst with that of the addition of the standard catalyst, it was seen that the addition of the resorcinol catalyst resulted in an increase in the rate at which the peak exotherm temperature was achieved without an appreciable increase in the peak exotherm temperature for both the 1 : 2.5 mole ratio and 1 : 3.7 mole ratio resin foam formulation.

## Claims

1. A method of making a closed cell phenolic foam material which comprises mixing a phenol formaldehyde resole resin, from which most of the free water has been vacuum stripped and which has a mole ratio of phenol to formaldehyde of from 1 : 1.5 to 1 : 4.5, a surfactant and a blowing agent with a modified acid catalyst consisting of an aromatic acid, a phenol selected from the group consisting of resorcinol, m-cresol, o-cresol and p-cresol or a mixture thereof, and a diluent and subsequently curing the resultant mixture from an ambient temperature of about 20°C to yield a closed cell phenolic foam, said phenol acting to achieve a maximum peak reaction temperature of 85 to 95°C in a time of from 3 to 6 min.

2. The method of claim 1 wherein the modified acid catalyst is introduced into the mixture of resin, surfactant and blowing agent by separate first and second streams, wherein said first stream is comprised of an aromatic acid diluted with a glycol and said second stream is comprised of a phenol.

3. The method of claim 1 or 2 wherein the aromatic acid is an aromatic sulfonic acid including benzene sulfonic acid, toluene sulfonic acid, xylene sulfonic acid, phenol sulfonic acid, naphthalene sulfonic acid and xylene-toluene sulfonic acid.

4. The method of claim 1 or 2 wherein the blowing agent is selected from trichlorofluoromethane, tetrafluoromethane, 1,1,2-trichloro-1,2,2-trifluoroethane, monochlorodifluoromethane, dichlorodifluoromethane, 1,1-dichloro-1,2,2-tetrafluoroethane, 1,2-dichloro-1,1,2,2-tetrafluoroethane, and mixtures thereof.

5. The method of claim 1 or 2 wherein the surfactant is a nonionic surfactant selected from the silicon containing surfactants and polyethylene-polypropylene oxides.

6. The method of claim 1 or 2 wherein the phenol formaldehyde resin (P/F) has a P/F mole ratio of from 1: 1.73.

7. The method of claim 1 or 2 wherein the diluent is a glycol, including diethylene glycol.

8. The method of any of claims 1 to 7 in which peak exotherm is reached in a time of 4 min.

## Ansprüche

1. Verfahren zum Herstellen eines phenolischen Schaumstoffs mit geschlossenen Zellen, das umfaßt

Mischen eines Phenolformaldehydresolharzes, aus dem das meiste freie Wasser im Vakuum abgezogen worden ist, und das ein Mol-Verhältnis von Phenol : Formaldehyd von 1 : 1,5 bis 1 : 4,5 besitzt, eines oberflächenaktiven Mittels und eines Treibmittels mit einem modifizierten sauren Katalysator bestehend aus einer aromatischen Säure, einem Phenol, ausgewählt aus der Gruppe bestehend aus Resorzin, m-Cresol, o-Cresol und p-Cresol oder einer Mischung davon, und einem Verdünnungsmittel, und anschließend

Härten der entstandenen Mischung von einer Umgebungstemperatur von ungefähr 20°C, um einen phenolischen Schaumstoff mit geschlossenen Zellen zu ergeben, wobei das Phenol bewirkt, eine maximale Spitzenreaktionstemperatur von 85-95°C in einer Zeit von 3 bis 6 min zu erzielen.

2. Verfahren nach Anspruch 1, worin der modifizierte saure Katalysator in die Mischung aus Harz, oberflächenaktivem Mittel und Treibmittel durch getrennten ersten und zweiten Strahl eingeführt wird, worin der erste Strahl eine aromatische Säure, verdünnt mit einem Glykol, und der zweite Strahl ein Phenol umfaßt.

3. Verfahren nach Anspruch 1 oder 2, worin die aromatische Säure eine aromatische Sulfonsäure ist, einschließend Benzolsulfonsäure, Toluolsulfonsäure, Xylolsulfonsäure, Phenolsulfonsäure, Naphthalinsulfonsäure und Xyluol-Toluol-Sulfonsäure.

4. Verfahren nach Anspruch 1 oder 2, worin das Treibmittel ausgewählt wird aus Trichlorfluormethan, Tetrafluormethan, 1,1,2-Trichlor-1,2,2-trifluoräthan, Monochlordifluormethan, Dichlordifluormethan, 1,1-Dichlor-1,2,2,2-tetrafluoräthan, 1,2-Dichlor-1,1,2,2-tetrafluoräthan und Mischungen davon.

5. Das Verfahren nach Anspruch 1 oder 2, worin das oberflächenaktive Mittel ein nichtionisches oberflächenaktives Mittel ist ausgewählt aus den Silizium enthaltenden oberflächenaktiven Mitteln und Polyäthylen-Polypropylenoxiden.

6. Verfahren nach Anspruch 1 oder 2, worin das Phenolformaldehydharz (P/F) ein P/F-Mol-Verhältnis von 1 : 1,73 besitzt.

7. Verfahren nach Anspruch 1 oder 2, worin das Verdünnungsmittel ein Glykol, einschließend Diäthylenglykol, ist.

8. Verfahren nach einem der Ansprüche 1 bis 7, in dem der Exotherm-Peak in einer Zeit von 4 min erreicht wird.

## Revendications

1. Procédé de production d'une matière en mousse phénolique à cellules fermées qui comprend le mélange d'une résine de résol phénol- formaldéhyde, dont la majeure partie de l'eau libre a été enlevée par strippage sous vide et qui présente un rapport molaire du phénol au formaldéhyde allant de 1 : 1,5 à 1 : 4,5, un surfactif et un agent de gonflement avec un catalyseur acide modifié consistant en un acide aromatique, un phénol choisi dans le groupe consistant en résorcinol, m-crésol, o-crésol et p-crésol ou un de leurs mélanges, et un diluant, et ensuite la maturation de durcissement du mélange résultant à partir d'une température ambiante d'environ 20°C, pour donner une mousse phénolique à cellules fermées le rôle dudit phénol étant de permettre d'atteindre une température de pic maximale de réaction de 85 à 95°C en un temps de 3 à 6 minutes.

2. Procédé selon la revendication 1, dans lequel le catalyseur acide modifié est introduit dans le mélange de la résine, du surfactif et de l'agent de gonflement par des premier et second courants séparés, le premier courant étant formé d'un acide aromatique dilué par un glycol, et le second courant étant constitué d'un phénol.

3. Procédé selon la revendication 1 ou 2, dans lequel l'acide aromatique est un acide aromatique sulfonique comprenant l'acide benzène sulfonique, l'acide toluène sulfonique, l'acide xylène sulfonique, l'acide phénol sulfonique, l'acide naphtalène sulfonique et l'acide xylène-toluène sulfonique.

4. Procédé selon la revendication 1 ou 2, dans lequel l'agent de gonflement est choisi parmi le trichlorofluométhane, le tétrafluorométhane, le 1,1,2-trichloro-1,2,2-trifluoroéthane, le monochlorodifluorométhane, le dichlorodifluorométhane, le 1,1-dichloro-1,2,2,2-tétrafluoroéthane, le 1,2-dichloro-1,1,2,2-tétrafluoroéthane, et leurs mélanges.

5. Procédé selon la revendication 1 ou 2, dans lequel le surfactif est un surfactif non ionique choisi parmi les surfactifs contenant du silicium et des oxydes de polyéthylène-polypropylène.

6. Procédé selon la revendication 1 ou 2, dans lequel la résine phénol-formaldéhyde (P/F) possède un rapport molaire P/F de 1 : 1,73.

7. Procédé selon la revendication 1 ou 2, dans lequel le diluant est un glycol, ce qui comprend le diéthylène glycol.

8. Procédé selon l'une quelconque des revendications 1 à 7, dans lequel le pic de dégagement de chaleur est atteint en un temps de 4 minutes.

FIG. 1

—△—△—△— 6.0g STANDARD CATALYST
—o—·o··o— 5.0g STANDARD CATALYST
-□-□-□- 3.3g STANDARD CATALYST

FIG. 2

EP 0 242 620 B1

-□-□- RESORCINOL CATALYST
-o-- o- STANDARD CATALYST

FIG. 3

EP 0 242 620 B1

FIG. 4

—□——□— RESORCINOL CATALYST
—○⋯○— STANDARD CATALYST

EP 0 242 620 B1